# EUROPEAN PATENT SPECIFICATION

(11) **EP 2 234 435 B1**
(45) Date of publication and mention of the grant of the patent: **11.03.2015**
(21) Application number: 09707882.8
(22) Date of filing: 22.01.2009
(51) Int. Cl.: H04W 36/00

(54) **CODE SWITCHING METHOD, SYSTEM AND DEVICE**
KODE-VERMITTLUNGSVERFAHREN, SYSTEM UND VORRICHTUNG
PROCÉDÉ, SYSTÈME ET DISPOSITIF DE COMMUTATION DE CODE

(30) Priority: 01.02.2008 CN 200810009154
(43) Date of publication of application: 29.09.2010
(73) Proprietor: Huawei Technologies Co., Ltd., Longgang District, Shenzhen Guangdong 518129 (CN)
(72) Inventor: LI, Guohong, 518129, Shenzhen (CN); LI, Feng, 518129, Shenzhen (CN); LUO, Shaohua, 518129, Shenzhen (CN)
(74) Representative: Körber, Martin Hans
(86) International application number: PCT/CN2009/070269
(87) International publication number: WO 2009/097803

(56) References cited:
- CN-A- 1 251 249
- CN-A- 1 354 957
- CN-A- 1 561 038
- CN-A- 1 921 478
- CN-A- 101 222 690
- US-A1- 2005 030 923
- "3rd Generation Partnership Project;Technical Specification Group GERAN;A-interface over IP Study (AINTIP);(Release 8)", 3GPP DRAFT; PROPOSED CLEANUP OF TR 43.903 UP TO CHAPTER 6.4, 3RD GENERATION PARTNERSHIP PROJECT (3GPP), MOBILE COMPETENCE CENTRE ; 650, ROUTE DES LUCIOLES ; F-06921 SOPHIA-ANTIPOLIS CEDEX ; FRANCE, vol. TSG GERAN, no. Vancouver; 20071116, 16 November 2007 (2007-11-16), XP050019350, [retrieved on 2007-11-16]

## Description

### Field of the Invention

The present invention relates to the field of communications technologies, and in particular, to a method, system, and device for handing over codes.

### Background of the Invention

When the A-interface is based on time division multiplex (TDM), for a codec handover (that is, speech version handover) initiated by the base station controller (BSC) according to air interface resource conditions or caused by an across-BTS (base transceiver station) handover of a mobile user, the codec handover is performed when the trans-coder (TC) of the BSC detects the change of the radio codec, and the code of the new speech version is sent to the core network (CN). In this process, the codec handover or codec change of the call is invisible to the CN.

After the A-interface becomes IP-based, for the speech service, global system for mobile communications (GSM) compressed codes are transmitted between the BSC and the media gateway (MGW) at a half rate (HR), a full rate (FR), an enhanced full rate (EFR), or an adaptive multirate (AMR). If the codecs used by the calling party and the called party are consistent, the transcoder free operation (TrFO) may be achieved, and the TC is free in the data transmission process. If the codecs used by the calling party and the called party are inconsistent, the TC needs to be mounted on the BSC or the MGW for codec conversion.

In the prior art, the following cases may result in an internal codec handover of the base station system (BSS).
(1) A mobile user performs an across-BTS handover in the same BSS.

Because the handover of the mobile user is performed between BTSs in the same BSS, the handover is an internal handover of the BSC for the MGW in the CN. If the across-BTS handover results in a code handover, the codec handover of a call may occur.
(2) The BSC adjusts the code type of the call according to the air interface resource conditions.

In the GSM system, to increase the radio capacity, codes (for example, FR) occupying more air interface resources are usually handed over to codes (for example, HR) occupying fewer air interface resources. When there are sufficient radio resources, a reverse handover process may occur.

The following problems have become apparent in the prior art:

After the A-interface become IP-based, the TC of the BSC needs to be moved to the MGW, and thus the codec handover is still visible to the CN. Therefore, a mechanism needs to be introduced to enable the BSC to instruct the CN to perform a codec handover. In addition, the impact on the speech and user experience need be minimized during the handover process. In the prior art, the BSC cannot instruct the CN to perform a codec handover.

A non-patent literature "3rd Generation Partnership Project; Technical Specification Group GERAN; A-interface over IP Study (AINTIP); (Release 8)", 3GPP DRAFT; PROPOSED CLEANUP OF TR43.903 UP TO CHAPTER 6.4, 3RD GENERATION PARTNERSHIP PROJECT (3GPP), MOBILE COMPETENCE CENTRE; 650, ROUTE DES LUCIOLES; F-06921 SOPHIA-ANTIPOLIS CEDEX; FRANCE, vol. TSG GERAN, no. Vancouver; 20071116, 16 November 2007, discloses that if a handover occurs and a voice codec in the Um interface has changed, a MGW needs to change its codec type accordingly. This can be achieved by a BSS sending a Channel Modify Prepare message to a MSC server. The MSC server requests the MGW to prepare for the IP Transport Layer using a new GCP procedure "Prepare IP Transport for A Interface". The MGW establishes the connection end point. The Transport Layer information of the connection end point is passed inside a new container element "AoIP Container IE" back to the MSC server. The MSC server forwards the new container transparently to BSS using an enhanced BSSMAP Assignment Request message. The BSS performs channel assignment. As part of the assignment procedure the Transport Layer information of the local connection end point inside the BSS is put into another AoIP Container IE, which is sent back to the MSC server within the BSSMAP Assignment Complete message. The MSC server forwards the new container transparently to the BSS using an enhanced BSSMAP Assignment Request message. The BSS performs channel assignment. As part of the assignment procedure the Transport Layer information of the local connection end point inside the BSS is put into another AoIP Container IE, which is sent back to the MSC within the BSSMAP Assignment Complete message. The MSC server forwards the received information transparently to the MGW using the existing procedure Modify IP Transport Address.

### Summary of the Invention

The present invention provides a method, system, and device for handing over codes.

According to a first aspect of the present invention, a method for handing over codes of a call in a GSM system is provided, including:
receiving, by a MSC server, a code handover instruction sent by a BSS, where the code handover instruction carries a new code type and a new BSS user plane connection endpoint identifier; forwarding the code handover instruction, by the MSC server, to a MGW; adding, by the MGW, a new CN user plane connection endpoint according to the new BSS user plane connection endpoint identifier notified by the MSC, sending, by the MGW, a speech packet of the new code type through the new CN user plane connection endpoint and a new BSS user plane connection endpoint corresponding to the new BSS user plane connection endpoint identifier, and simultaneously sending and receiving a speech packet through an original BSS user plane connection endpoint and an original CN user plane connection endpoint.

According to a second aspect of the present invention, a media gateway, MGW for handing over codes of a call in a GSM system is provided, including:
a user plane connection endpoint adding unit, configured to add a new CN user plane connection endpoint according to a new base station system, BSS, user plane connection endpoint identifier notified by a MSC server; and
a transceiver unit, configured to: send a speech packet of a new code type to a new BSS user plane connection endpoint through the new CN user plane connection endpoint added by the user plane connection endpoint adding unit, and simultaneously send and receive a speech packet through an original BSS user plane connection endpoint and an original CN user plane connection endpoint.

According to a third aspect of the present invention, a core network, CN, for handing over codes of a call in a GSM system is provided, including above-said MSC server and MGW.

According to a fourth aspect of the present invention, a GSM system for handing over codes of a call thereof is provided, including above-said CN and a base station system, BSS that is configured to send the code handover instruction to the MSC server of the CN, and receive the speech packet, that is of the new code type and is sent by the MGs of the CN through the new CN user plane connection endpoint of the CN and through the new BSS user plane connection endpoint of the BSS.

In the technical solution of the present invention, when the A-interface becomes IP-based and codes are handed over in the BSS, through the interactions between the BSS and the CN, a new CN user plane connection endpoint at the CN side is added to cooperate with a new BSS user plane connection endpoint at the BSS side; and a speech packet of a new code type is sent. In this way, the codes are handed over between the BSS side and the CN side synchronously, and thus the consistency of codes at the BSS side and at the CN side is ensured and the quality of speech calls is guaranteed.

### Brief Description of the Drawings

FIG. 1 is a flowchart of a method for handing over codes in an embodiment of the present invention;
FIG. 2 is a schematic diagram illustrating a networking structure when the A-interface becomes IP-based in an embodiment of the present invention;
FIG. 3 is a flowchart of a method for handing over codes in an embodiment of the present invention;
FIG. 4 shows a process of triggering a code handover by an intra-BSC handover in an embodiment of the present invention;
FIG. 5A, FIG. 5B, and FIG. 5C illustrate changing of a user plane endpoint of an MGW in a code handover process in an embodiment of the present invention;
FIG. 6 illustrates a system for handing over codes in an embodiment of the present invention;
FIG. 7 shows a structure of an MSC server in an embodiment of the present invention; and
FIG. 8 shows a structure of an MGW in an embodiment of the present invention.

### Detailed Description of the Embodiments

The present invention is hereinafter described in detail with reference to the accompanying drawings and exemplary embodiments.

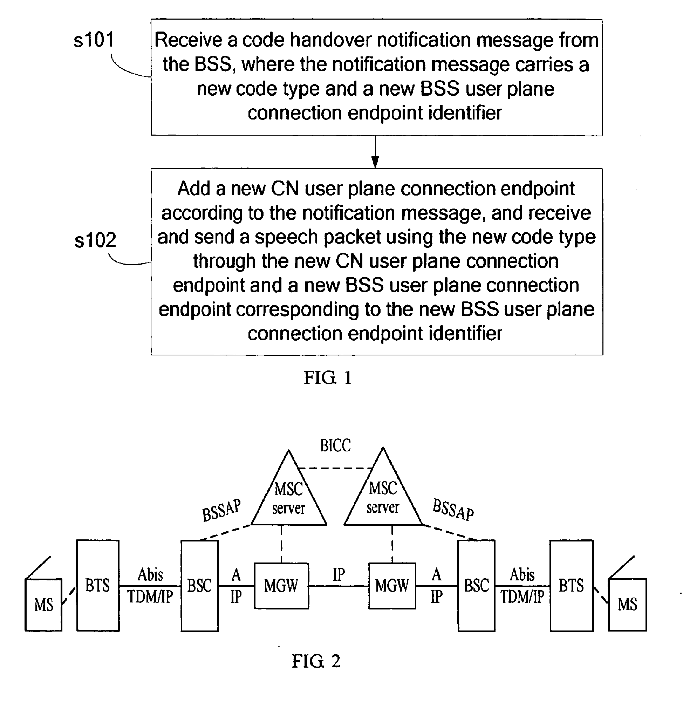

A method for handing over codes is provided in an embodiment of the present invention. As shown in FIG. 1, the method includes the following steps:
Step s101: Receive a code handover instruction sent by the BSS, where the instruction carries a new code type and a new BSS user plane connection endpoint identifier.
Step s102: Add a new CN user plane connection endpoint according to the instruction, and receive and send a speech packet that is of the new code type through the new CN user plane connection endpoint and a BSS user plane connection endpoint corresponding to the new BSS user plane connection endpoint identifier.

By using the method provided in this embodiment, when the A-interface becomes IP-based and codes are handed over in the BSS, through the interactions between the BSS and the CN, a new CN user plane connection endpoint of the CN is added to cooperate with a new BSS user plane connection endpoint of the BSS; and a speech packet that is of a new code type is sent from the CN to the BSS. In this way, the codes are handed over between the BSS and the CN synchronously, and thus the consistency of codes at the BSS side and at the CN side is ensured and the quality of speech calls is guaranteed.

In this embodiment, in the GSM system, the BSS generally consists of a BSC and one or multiple BTSs, where the BSC is connected with the Mobile Switching Center (MSC), and the mobile station (MS) is connected to the BTS through a radio interface. The BTS is responsible for radio transmission, and the BSC is responsible for control and management. The interface between the BSC and the MSC is called A-interface. The MSC further includes an MSC server and an MGW. The connection between the MSC server and the BSC is a signaling plane connection, and the connection between the MGW and the BSC is a user plane connection.

FIG. 2 illustrates the networking structure after the A-interface becomes IP-based. In this case, the BSS does not have a TC any longer. After the code of the air interface passes through the BSS, the code is directly transmitted on the A-interface. In a call process, if code handover occurs in the BSS, the CN is required to be instructed to perform a synchronous handover to ensure that speech is normal. In the synchronous handover process, the out-of-sync time in the code handover between the BSS and the CN need be minimized to reduce the impact on the speech quality due to the code handover.

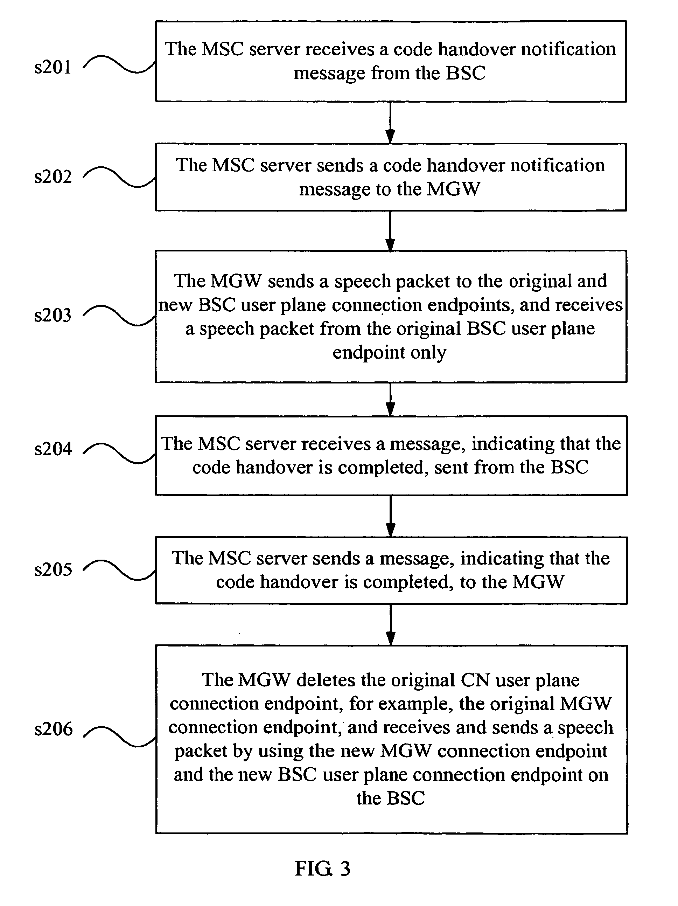

An embodiment of the present invention provides a method for handing over codes to implement a code handover when the A-interface becomes IP-based in the GSM network. As shown in FIG. 3, the method includes the following steps:
Step s201: The MSC server receives a first code handover instruction sent by the BSC.

Specifically, the MSC server in the CN receives the first code handover instruction sent by the BSC in the BSS, where the first code handover instruction carries a new code type and a new BSC user plane connection endpoint identifier.

Step s202: The MSC server sends a second code handover instruction to the MGW

Specifically, the MSC server in the CN sends the second code handover instruction to the MGW in the CN, where the second code handover instruction carries the new code type and the new BSC user plane connection endpoint identifier.

Step s203: The MGW sends a speech packet to the new and original BSC user plane connection endpoints simultaneously, and receives a speech packet from the original BSC user plane endpoint only.

Specifically, the MGW adds a new CN user plane connection endpoint locally according to the new BSC user plane connection endpoint identifier, and establishes a connection with the new BSC user plane connection endpoint for sending a speech packet. In addition, the MGW receives and sends a speech packet through the original CN user plane connection endpoint and the original BSC user plane connection endpoint.

Step s204: The MSC server receives a first message, indicating that the code handover is completed, sent by the BSC.

Specifically, when the code handover is completed in the BSS, the BSS deletes the original user plane connection endpoint of the BSC, and sends the first message, indicating that the code handover is completed, to the MSC server.

Step s205: The MSC server sends a second message, indicating that the code handover is completed, to the MGW.

Step s206: The MGW deletes the original CN user plane connection endpoint, for example, the original MGW connection endpoint, and receives and sends a speech packet through the new MGW connection endpoint and the new BSC user plane connection endpoint, where the new BSC user plane connection endpoint is located at the BSC side.

The following further describes the implementation mode of the present invention with reference to specific scenarios.

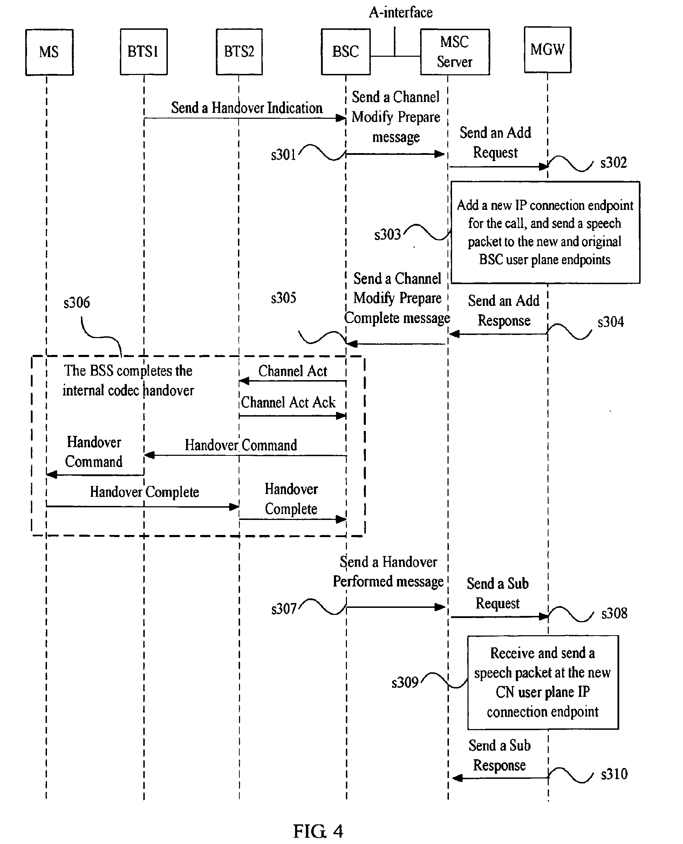

When an MS performs an across-BTS handover in the same BSS, a Channel Modify Prepare message and a Channel Modify Prepare Complete message are introduced on the A-interface. The specific code handover process is as shown in FIG. 4 and includes the following steps:
Step s301: The BSC in the BSS decides to perform a codec handover, and sends a Channel Modify Prepare message to the MSC server, where the message carries a new Speech Version (that is, speech code type or codec) and a new BSC user plane IP connection endpoint identifier.
Step s302: The MSC server sends an Add Request to the MGW, where the Add Request carries new codec information (obtained from the above-mentioned Speech Version) and the new BSC user plane IP connection endpoint identifier, and notifies the MGW of a session ID needed by a code handover.
Step s303: The MGW adds a new IP connection endpoint and sends a speech packet to the new and original BSC user plane endpoints simultaneously. However, the MGW receives a speech packet from the original BSC user plane endpoint only. Information about the original BSC user plane endpoint may be obtained from the session ID that the MSC server sends through the Add Request in step s302.
Step s304: The MGW sends an Add Response to the MSC server, and notifies the MSC server of a new MGW user plane IP connection endpoint identifier through the Add Response.
Step s305: The MSC server sends a Channel Modify Prepare Complete message that carries the new MGW user plane IP connection endpoint identifier to the BSC. Then, the BSC sends a speech packet to the new MGW user plane IP connection endpoint according to the new MGW user plane IP connection endpoint identifier.
Step s306: The BSS completes the internal codec handover.
Step s307: The BSS deletes the original BSC user plane IP connection endpoint, and the BSC sends a Handover Performed message to the MSC server, notifying the completion of the code handover.
Step s308: The MSC server sends a Sub Request to the MGW, instructing the MGW to delete the original CN user plane IP connection endpoint.
Step s309: The MGW begins to receive and send a speech packet through the new CN user plane IP connection endpoint.
Step s310: The MGW sends a Sub Response to the MSC server.

It should be noted that, if the BSS fails to complete the internal codec handover due to some reasons in step s306, the BSC sends a Handover Performed message that carries an indication of the handover failure to the MSC server. The MSC server instructs the MGW to delete the new MGW user plane IP connection endpoint. The MGW continues receiving and sending a speech packet at the original MGW user plane IP connection endpoint.

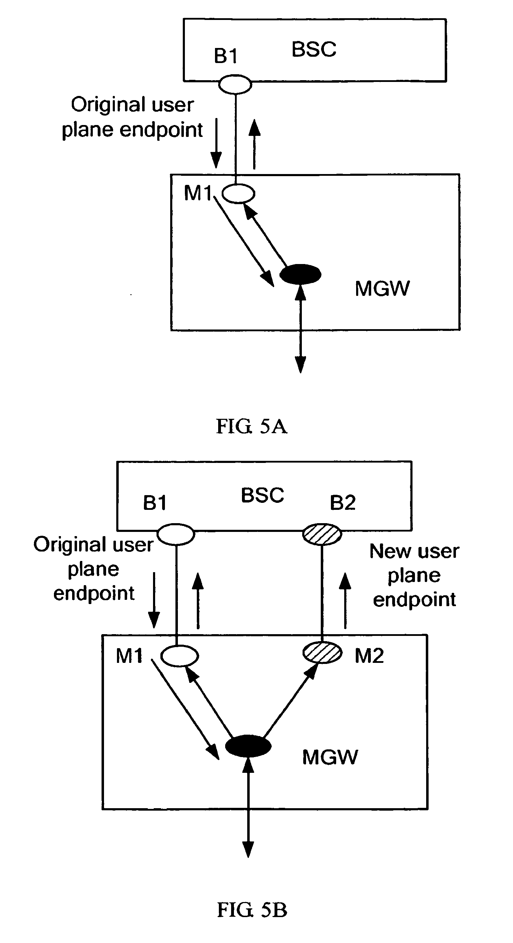

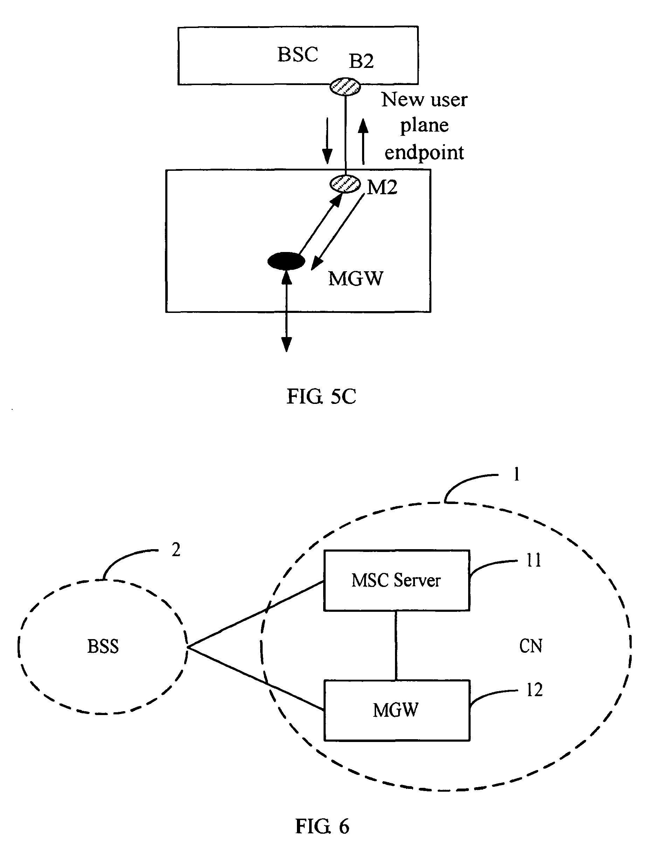

The following describes the change of a user plane endpoint of the MGW in the code handover process shown in FIG. 4 with reference to FIG. 5. It is assumed that before the code handover process, the MGW is connected with a user plane endpoint B1 at the BSC side through the user plane endpoint M1 for receiving and sending a speech packet, as shown in FIG. 5A. After the MGW receives an Add Request from the MSC server, as shown in FIG. 5B, the MGW obtains the new BSC user plane connection endpoint B2 identifier. Then, the MGW adds a new connection endpoint M2 for the B2 locally. The MGW sends a speech packet to the original BSC user plane endpoint B1 through M1and sends a speech packet to B2 through M2 simultaneously. In addition, the MGW receives a speech packet from B1 through M1. After receiving a Sub Request from the MSC server, the MGW deletes M1, as shown in FIG. 5C. At this time, the BSC deletes B1, and the MGW is connected with B2 at the BSC side through M2 for receiving and sending a speech packet.

The process of changing the code type initiated by the BSC according to the air interface resource conditions is the same as the process shown in FIG. 4 in terms of the A-interface between the BSC and the MSC server. The difference lies in the internal handover process of the BSS. Thus, the process of changing the code type in terms of the A-interface is not repeatedly described.

By using the method provided in this embodiment, when the A-interface becomes IP-based and codes are handed over in the BSS, through the interactions between the BSS and the CN, a new CN user plane connection endpoint of the CN is added to cooperate with a new BSS user plane connection endpoint at the BSS side, and the new CN user plane connection endpoint is used to send to the new BSC user plane connection a speech packet that is of the new code type; after the BSS completes the code handover, the new CN user plane connection point of the CN and new BSC user plane connection endpoint of the BSS are used to receive and send a speech packet that is of the new code type. In this way, the codes are handed over between the BSS and the CN synchronously, and thus the consistency of codes at the BSS side and at the CN side is ensured and the quality of speech calls is guaranteed.

An embodiment of the present invention provides a system for handing over codes to implement an internal code handover of the BSS when the A-interface becomes IP-based in the GSM network. As shown in FIG. 6, the system includes a CN 1 and a BSS 2.

The CN 1 is configured to: receive a code handover instruction sent by the BSS 2; add a new CN user plane connection endpoint according to the instruction, and send a speech packet that is of the new code type to a new BSS user plane connection endpoint through the new CN user plane connection endpoint; delete the original local CN user plane connection endpoint when receiving a message, indicating that the code handover is completed, from the BSS, and receive and send a speech packet that is of the new code type through the new CN user plane connection endpoint with the BSS 2.

The BSS 2 is configured to: send a code handover instruction to the CN 1; receive a speech packet, which is of the new code type and is sent by the CN 1 to the local new BSS user plane connection endpoint through the new CN user plane connection endpoint; after the code handover is completed, delete the original local BSS user plane connection endpoint, and receive and send a speech packet that is of the new code type through the new BSS user plane connection endpoint with the CN.

The CN 1 further includes an MSC server 11 and an MGW 12.

The MSC server 11 is configured to: receive a code handover instruction that the BSS sends through the A-interface, and notify the MGW 12 of the new code type and the new BSS user plane connection endpoint identifier carried in the instruction.

The MSC server 11 is further configured to notify the MGW 12 of the completion of the code handover when receiving a message, indicating that the code handover is completed, sent by the BSS through the A-interface.

The MGW 12 is configured to: receive a code handover instruction from the MSC server 11, add a new CN user plane connection endpoint according to the new BSS user plane connection endpoint identifier, and send a speech packet that is of the new code type to the new BSS user plane connection endpoint.

The MGW 12 is further configured to: when receiving a message, indicating that the code handover is completed, from the MSC server 11, delete the original local CN user plane connection point, and receive and send the a speech packet that is of the new code type through the new CN user plane connection endpoint and new BSS user plane connection endpoint.

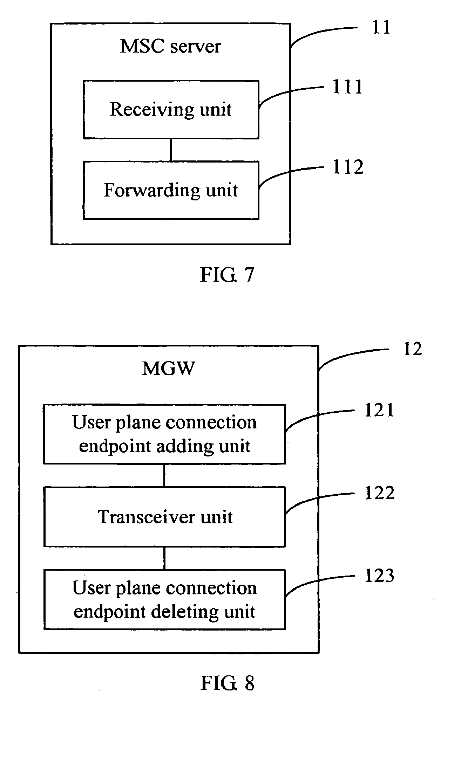

As shown in FIG. 7, the MSC server 11 further includes a receiving unit 111 and a forwarding unit 112.

The receiving unit 111 is configured to receive a code handover instruction that the BSS sends through the A-interface, where the code handover instruction carries a new code type and a new BSS user plane connection endpoint identifier.

The forwarding unit 112 is configured to forward the code handover instruction received by the receiving unit 111 to the MGW 12.

The receiving unit 111 is further configured to receive a message, indicating that the code handover is completed, sent by the BSS through the A-interface.

The forwarding unit 112 is further configured to forward the message, indicating that the code handover is completed, received by the receiving unit 111 to the MGW 12.

The MSC server 11 may also be configured to receive a new MGW user plane IP connection identifier from the MGW 12 and send the new MGW user plane IP connection identifier to the BSS. For example, the MSC server 11 receives an Add Response that includes a new MGW user plane IP connection identifier from the MGW 12. The MSC server 11 sends a Channel Modify Prepare Complete message that carries the new MGW user plane IP connection identifier to the BSC of the BSS.

As shown in FIG. 8, the MGW 12 further includes:
a user plane connection endpoint adding unit 121, configured to add a new CN user plane connection endpoint according to the new BSS user plane connection endpoint identifier notified by the MSC server 11;
a transceiver unit 122, configured to: send a speech packet that is of the new code type to the new BSS user plane connection endpoint through the new CN user plane connection endpoint added by the user plane connection endpoint adding unit 121, send a speech packet to the original BSS user plane connection endpoint through the original CN user plane connection endpoint, and receive a speech packet from the original BSS user plane connection endpoint; and
a user plane connection endpoint deleting unit 123, configured to delete the original local CN user plane connection endpoint when receiving a message, indicating that the code handover is completed, sent from the MSC server 11.

The transceiver unit 122 then receives and sends a speech packet that is of the new code type through the new CN user plane connection endpoint and the new BSS user plane connection endpoint only.

By using the system and device provided in embodiments the present invention, when the A-interface becomes IP-based and codes are handed over in the BSS, through the interactions between the BSS and the CN, a new CN user plane connection endpoint of the CN is added to cooperate with a new BSS user plane connection endpoint of the BSS and used to send a speech packet that is of the new code type; after the BSS completes the code handover, the new CN user plane connection point of the CN and new BSS user plane connection endpoint of the BSS are used to receive and send a speech packet that is of the new code type. In this way, the codes are handed over between the BSS and the CN synchronously, and thus the consistency of codes at the BSS side and at the CN side is ensured and the quality of speech calls is guaranteed.

Through the descriptions of the preceding embodiments, those skilled in the art may understand that the present invention may be implemented by hardware only or by software and a necessary universal hardware platform. Based on such understandings, the technical solution under the present invention may be embodied in the form of a software product. The software product may be stored in a nonvolatile storage medium, which can be a compact disk read-only memory (CD-ROM), USB flash disk, or a removable hard disk. The software product includes a number of instructions that enable a computer device (personal computer, server, or network device) to execute the methods provided in the embodiments of the present invention.

The above descriptions are merely exemplary embodiments of the present invention, but not intended to limit the scope of the present invention.

## Claims

1. A method for handing over codes of a call in a GSM system, **characterized by**:
receiving (s101), by a Mobile Switching Center, MSC, server, a code handover instruction sent by a base station system, BSS, wherein the instruction carries a new code type and a new BSS user plane connection endpoint identifier;
forwarding the code handover instruction, by the MSC server, to a media gateway, MGW; and
adding (s102), by the MGW, a new core network, CN, user plane connection endpoint (M2) according to the new BSS user plane connection endpoint identifier notified by the MSC,
sending, by the MGW, a speech packet of the new code type through the new CN user plane connection endpoint (M2) and a new BSS user plane connection endpoint (B2) corresponding to the new BSS user plane connection endpoint identifier, and simultaneously sending and receiving a speech packet through an original BSS user plane connection endpoint (B1) and an original CN user plane connection endpoint (M1).

2. The method of claim 1, further comprising the steps of
receiving a message, indicating that the code handover is completed, sent by the BSS;
deleting an original CN user plane connection endpoint (M1); and
receiving from the BSS or sending to the BSS a speech packet of the new code type through the new CN user plane connection endpoint (M2).

3. The method of claim 2, wherein the step of receiving the message, indicating that the code handover is completed, sent by the BSS, deleting the original CN user plane connection point (M1), and receiving from the BSS or sending to the BSS the speech packet of the new code type through the new CN user plane connection endpoint comprises (M2):
receiving, by the MSC server, a message, indicating that the code handover is completed, sent by a base station controller BSC in the BSS, and notifying the MGW of completion of the code handover; and
deleting, by the MGW, the original CN user plane connection endpoint (M1), and receiving and sending a speech packet of the new code type through the new CN user plane connection endpoint (M2) and the new BSS user plane connection endpoint (B2).

4. The method of claim 1, wherein the step of receiving the code handover instruction sent by the BSS comprises: receiving a Channel Modify Prepare message sent by the BSS as a code handover instruction.

5. The method of claim 1, further comprising:
sending, by the MSC server, a notification to the BSS to notify the BSS of the new CN user plane connection endpoint identifier.

6. The method of claim 5, wherein the notification that the CN sends to the BSS is a Channel Modify Prepare Complete message.

7. A media gateway, MGW, for handing over codes of a call in a GSM system, **characterized by** comprising:
a user plane connection endpoint adding unit (121), configured to add a new CN user plane connection endpoint (M2) according to a new base station system, BSS, user plane connection endpoint identifier notified by a MSC server; and
a transceiver unit (122), configured to send a speech packet of a new code type to a new BSS user plane connection endpoint (B2) through the new CN user plane connection endpoint (M2) added by the user plane connection endpoint adding unit, and simultaneously send and receive a speech packet through an original BSS user plane connection endpoint (B1) and an original CN user plane connection endpoint (M1).

8. The MGW of claim 7, wherein:
the MGW further comprises a user plane connection endpoint deleting unit (123), configured to delete the original CN user plane connection endpoint (M1) when receiving a message, indicating that the code handover is completed, sent by the MSC server; and
wherein the transceiver unit (122) is further configured to receive and send a speech packet of the new code type through the new CN user plane connection endpoint (M2) and the new BSS user plane connection endpoint (B2) only.

9. A core network, CN, for handing over codes of a call in a GSM system, **characterized by** comprising a Mobile Switching Center, MSC, server and a media gateway, MGW,
wherein the MSC server comprises a receiving unit (111), configured to receive a code handover instruction sent by a base station system, BSS, wherein the code handover instruction carries a new code type and a new BSS user plane connection endpoint identifier; and a forwarding unit (112), configured to forward the code handover instruction received by the receiving unit to the media gateway, MGW, and
wherein the MGW is according to any one of claims 7-8.

10. A GSM system for handing over codes of a call in the GSM system, comprising the CN of claim 9 and a base station system, BSS,
wherein the BSS is configured to send the code handover instruction to the MSC server of the CN, and receive the speech packet, that is of the new code type and is sent by the MGW of the CN through the new CN user plane connection endpoint (M2) of the CN and through the new BSS user plane connection endpoint (B2) of the BSS.

## Patentansprüche

1. Verfahren für das Übergeben von Codes eines Anrufs in einem GSM-System, **dadurch gekennzeichnet, dass** das Verfahren umfasst:
Empfangen (s101) durch einen Server einer Vermittlungsstelle in Mobilfunknetzen (Mobile Switching Center Server, MSC-Server) einer Codeübergabeanweisung, die von einem Basisstationssystem, BSS, gesendet wurde, wobei die Anweisung einen neuen Codetyp und eine neue Verbindungsendpunktkennung einer BSS-Teilnehmerebene trägt;
Weiterleiten der Codeübergabeanweisung durch den MSC-Server an ein Medien-Gateway, MGW; und
Hinzufügen (s102) durch das MGW eines neuen Verbindungsendpunkts (M2) einer Teilnehmerebene eines Kernnetzwerks (Core Network, CN) gemäß der durch die MSC benachrichtigte neue Verbindungsendpunktkennung einer BSS-Teilnehmerebene;
Senden durch das MGW eines Sprachdatenpakets des neuen Codetyps durch den neuen Verbindungsendpunkt einer CN-Teilnehmerebene (M2) und durch einen neuen Verbindungsendpunkt einer BSS-Teilnehmerebene (B2), die der neuen Verbindungsendpunktkennung einer BSS-Teilnehmerebene entspricht; und
gleichzeitig Senden und Empfangen eines Sprachdatenpakets durch einen ursprünglichen Verbindungsendpunkt einer BSS-Teilnehmerebene (B1) und einen ursprünglichen Verbindungsendpunkt einer CN-Teilnehmerebene (M1).

2. Verfahren nach Anspruch 1, das außerdem die folgenden Schritte umfasst:
Empfangen einer von dem BSS gesendeten Nachricht, die anzeigt, dass die Codeübergabe abgeschlossen ist;
Löschen eines ursprünglichen Verbindungsendpunkts einer CN-Teilnehmerebene (M1); und
Empfangen von dem BSS oder Senden an das BSS eines Sprachdatenpakets des neuen Codetyps durch den neuen Verbindungsendpunkt einer CN-Teilnehmerebene (M2).

3. Verfahren nach Anspruch 2, wobei die Schritte des Empfangens der von dem BSS gesendeten Nachricht, die anzeigt, dass die Codeübergabe abgeschlossen ist, des Löschens des ursprünglichen Verbindungspunkts einer CN-Teilnehmerebene (M1); und des Empfangens von dem BSS oder des Sendens an das BSS des Sprachdatenpakets des neuen Codetyps durch den neuen Verbindungsendpunkt einer CN-Teilnehmerebene (M2) umfassen:
Empfangen durch den MSC-Server einer Nachricht, die anzeigt, dass die Codeübergabe abgeschlossen ist und die von einer Basisstationsteuereinheit (Base Station Controller, BSC) in dem BSS gesendet wurde; und Benachrichtigen des MGW über den Abschluss der Codeübergabe;
Löschen durch das MGW des ursprünglichen Verbindungsendpunkts einer CN-Teilnehmerebene (M1) und Empfangen und Senden eines Sprachdatenpakets des neuen Codetyps durch den neuen Verbindungsendpunkt einer CN-Teilnehmerebene (M2) und den neuen Verbindungsendpunkt einer BSS-Teilnehmerebene (B2).

4. Verfahren nach Anspruch 1, wobei der Schritt des Empfangens der von dem BSS gesendeten Codeübergabeanweisung umfasst: Empfangen einer von dem BSS gesendeten Nachricht zur Vorbereitung einer Kanaländerung als eine Codeübergabeanweisung.

5. Verfahren nach Anspruch 1, außerdem umfassend:
Senden einer Benachrichtigung durch den MSC-Server an das BSS, um das BSS über die neue Verbindungsendpunktkennung einer CN-Teilnehmerebene zu benachrichtigen.

6. Verfahren nach Anspruch 5, wobei die von dem CN an das BSS gesendete Benachrichtigung eine Nachricht einer abgeschlossenen Vorbereitung einer Kanaländerung ist.

7. Medien-Gateway, MGW, für das Übergeben von Codes eines Anrufs in einem GSM-System, **dadurch gekennzeichnet, dass** das MGW umfasst:
eine Einheit zum Hinzufügen eines Verbindungsendpunkts einer Teilnehmerebene (121), die konfiguriert ist, einen neuen Verbindungsendpunkt einer CN-Teilnehmerebene (M2) gemäß einer neuen Verbindungsendpunktkennung einer Teilnehmerebene eines Basisstationssystems, BSS, hinzuzufügen, die durch einen MSC-Server benachrichtigt wurde; und
eine Sender-Empfänger-Einheit (122), die konfiguriert ist, ein Sprachdatenpaket eines neuen Codetyps durch den neuen Verbindungsendpunkt einer CN-Teilnehmerebene (M2), der von der Einheit zum Hinzufügen einer Verbindungsendpunktkennung einer Teilnehmerebene hinzugefügt wurde, an einen neuen Verbindungsendpunkt einer BSS-Teilnehmerebene (B2) zu senden; und
gleichzeitig ein Sprachdatenpaket durch einen ursprünglichen Verbindungsendpunkt einer BSS-Teilnehmerebene (B1) und einen ursprünglichen Verbindungsendpunkt einer CN-Teilnehmerebene (M1) zu senden und zu empfangen.

8. MGW nach Anspruch 7, wobei:
das MGW außerdem eine Einheit zum Löschen eines Verbindungsendpunkts einer Teilnehmerebene (123) umfasst, die konfiguriert ist, den ursprünglichen Verbindungsendpunkt einer CN-Teilnehmerebene (M1) zu löschen, wenn eine von dem MSC-Server gesendete Nachricht empfangen wird, die anzeigt, dass die Codeübergabe abgeschlossen ist; und
wobei die Sender-Empfänger-Einheit (122) außerdem konfiguriert ist, ein Sprachdatenpaket des neuen Codetyps nur durch den neuen Verbindungsendpunkt einer CN-Teilnehmerebene (M2) und den neuen Verbindungsendpunkt einer BSS-Teilnehmerebene (B2) zu empfangen und zu senden.

9. Kernnetzwerk (Core Network, CN) für das Übergeben von Codes eines Anrufs in einem GSM-System, **dadurch gekennzeichnet, dass** das Kernnetzwerk einen Server einer Vermittlungsstelle in Mobilfunknetzen (Mobile Switching Center Server, MSC-Server) und ein Medien-Gateway, MGW, umfasst,
wobei der MSC-Server eine Empfangseinheit (111), die konfiguriert ist eine von einem Basisstationssystem, BSS, gesendete Codeübergabeanweisung zu empfangen, wobei die Codeübergabeanweisung einen neuen Codetyp und eine neue Verbindungsendpunktkennung einer BSS-Teilnehmerebene trägt, und eine Weiterleitungseinheit (112) umfasst, die konfiguriert ist, die von der Empfangseinheit empfangene Codeübergabeanweisung an das Medien-Gateway, MGW, weiterzuleiten; und
wobei das MGW nach einem der Ansprüche 7 bis 8 ist.

10. GSM-System für das Übergeben von Codes eines Anrufs in dem GSM-System, welches das CN nach Anspruch 9 und ein Basisstationssystem, BSS, umfasst,
wobei das BSS konfiguriert ist, die Codeübergabeanweisung an den MSC-Server des CN zu senden und das Sprachdatenpaket zu empfangen, das von dem neuen Codetyp ist und von dem MGW des CN durch den neuen Verbindungsendpunkt einer CN-Teilnehmerebene (M2) des CN und durch den neuen Verbindungsendpunkt einer BSS-Teilnehmerebene (B2) des BSS gesendet wird.

## Revendications

1. Procédé de transfert de codes d'un appel dans un système GSM, **caractérisé par** :
la réception (s101), par un serveur de Centre de Commutation Mobile, MSC (Mobile Switching Center), d'une instruction de transfert de code envoyée par un système de station de base, BSS (Base Station System), dans lequel l'instruction achemine un nouveau type de code et un nouvel identifiant de point d'extrémité de connexion de plan utilisateur de BSS ;
le réacheminement de l'instruction de transfert de code, par le serveur MSC, à une passerelle multimédia, MGW (Media Gateway) ; et
l'ajout (s102), par la MGW, d'un nouveau point d'extrémité de connexion de plan utilisateur de coeur de réseau, CN (Core Network), (M2) conformément au nouvel identifiant de point d'extrémité de connexion de plan utilisateur de BSS notifié par le MSC,
l'envoi, par la MGW, d'un paquet vocal du nouveau type de code par l'intermédiaire du nouveau point d'extrémité de connexion de plan utilisateur de CN (M2) et d'un nouveau point d'extrémité de connexion de plan utilisateur de BSS (B2) correspondant au nouvel identifiant de point d'extrémité de connexion de plan utilisateur de BSS, et l'envoi et la réception simultanés d'un paquet vocal par l'intermédiaire d'un point d'extrémité de connexion de plan utilisateur de BSS initial (B1) et d'un point d'extrémité de connexion de plan utilisateur de CN initial (M1).

2. Procédé selon la revendication 1, comprenant en outre les étapes de réception d'un message indiquant que le transfert de code est achevé, envoyé par le BSS ;
suppression d'un point d'extrémité de connexion de plan utilisateur de CN initial (M1) ; et
réception en provenance du BSS ou envoi au BSS d'un paquet vocal du nouveau type de code par l'intermédiaire du nouveau point d'extrémité de connexion de plan utilisateur de CN (M2).

3. Procédé selon la revendication 2, dans lequel l'étape de réception du message indiquant que le transfert de code est achevé, envoyé par le BSS, de suppression du point de connexion de plan utilisateur de CN initial (M1), et de réception en provenance du BSS ou d'envoi au BSS du paquet vocal du nouveau type de code par l'intermédiaire du nouveau point d'extrémité de connexion de plan utilisateur de CN (M2) comprend :
la réception, par le serveur MSC, d'un message indiquant que le transfert de code est achevé, envoyé par un contrôleur de station de base, BSC (Base Station Controller) dans le BSS, et la notification de l'achèvement du transfert de code à la MGW ; et
la suppression, par la MGW, du point d'extrémité de connexion de plan utilisateur de CN initial (M1), et la réception et l'envoi d'un paquet vocal du nouveau type de code par l'intermédiaire du nouveau point d'extrémité de connexion de plan utilisateur de CN (M2) et du nouveau point d'extrémité de connexion de plan utilisateur de BSS (B2).

4. Procédé selon la revendication 1, dans lequel l'étape de réception de l'instruction de transfert de code envoyée par le BSS comprend : la réception d'un message de Préparation à la Modification des Canaux envoyé par le BSS sous la forme d'une instruction de transfert de code.

5. Procédé selon la revendication 1, comprenant en outre :
l'envoi, par le serveur MSC, d'une notification au BSS pour notifier au BSS le nouvel identifiant de point d'extrémité de connexion de plan utilisateur de CN.

6. Procédé selon la revendication 5, dans lequel la notification que le CN envoie au BSS est une message de Préparation à la Modification des Canaux Terminée.

7. Passerelle multimédia, MGW, destinée à transférer des codes d'un appel dans un système GSM, **caractérisée en ce qu'**elle comprend :
une unité d'ajout de point d'extrémité de connexion de plan utilisateur (121), configurée pour ajouter un nouveau point d'extrémité de connexion de plan utilisateur de CN (M2) conformément à un nouvel identifiant de point d'extrémité de connexion de plan utilisateur de système de station de base, BSS, notifié par un serveur MSC ; et
une unité d'émission-réception (122), configurée pour envoyer un paquet vocal d'un nouveau type de code à un nouveau point d'extrémité de connexion de plan utilisateur de BSS (B2) par l'intermédiaire du nouveau point d'extrémité de connexion de plan utilisateur de CN (M2) ajouté par l'unité d'ajout de point d'extrémité de connexion de plan utilisateur, et pour envoyer et recevoir simultanément un paquet vocal par l'intermédiaire d'un point d'extrémité de connexion de plan utilisateur de BSS initial (B1) et d'un point d'extrémité de connexion de plan utilisateur de CN initial (M1).

8. MGW selon la revendication 7, dans laquelle :
la MGW comprend en outre une unité de suppression de point d'extrémité de connexion de plan utilisateur (123), configurée pour supprimer le point d'extrémité de connexion de plan utilisateur de CN initial (M1) lors de la réception d'un message indiquant que le transfert de code est achevé, envoyé par le serveur MSC ; et
dans laquelle l'unité d'émission-réception (122) est en outre configurée pour recevoir et envoyer un paquet vocal du nouveau type de code uniquement par l'intermédiaire du nouveau point d'extrémité de connexion de plan utilisateur de CN (M2) et du nouveau point d'extrémité de connexion de plan utilisateur de BSS (B2).

9. Coeur de réseau, CN, destiné à transférer des codes d'un appel dans un système GSM, **caractérisé en ce qu'**il comprend un serveur de Centre de Commutation Mobile, MSC, et une passerelle multimédia, MGW,
dans lequel le serveur MSC comprend une unité de réception (111), configurée pour recevoir une instruction de transfert de code envoyée par un système de station de base, BSS, dans lequel l'instruction de transfert de code achemine un nouveau type de code et un nouvel identifiant de point d'extrémité de connexion de plan utilisateur de BSS, et une unité de réacheminement (112), configurée pour réacheminer l'instruction de transfert de code reçue par l'unité de réception à la passerelle multimédia, MGW, et
dans lequel la MGW est selon l'une quelconque des revendications 7-8.

10. Système GSM destiné à transférer des codes d'un appel dans un système GSM, comprenant le CN selon la revendication 9 et un système de station de base, BSS, dans lequel le BSS est configuré pour envoyer l'instruction de transfert de code au serveur MSC du CN, et recevoir le paquet vocal, qui est du nouveau type de code et est envoyé par la MGW du CN par l'intermédiaire du nouveau point d'extrémité de connexion de plan utilisateur de CN (M2) du CN et par l'intermédiaire du nouveau point d'extrémité de connexion de plan utilisateur de BSS (B2) du BSS.
